# EUROPÄISCHE PATENTSCHRIFT

(11) **EP 4 013 999 B1**
(45) Veröffentlichungstag und Bekanntmachung des Hinweises auf die Patenterteilung: **20.11.2024**
(21) Anmeldenummer: 20750663.5
(22) Anmeldetag: 03.08.2020
(51) Int. Cl.: F24S 23/70, F24S 23/71, F24S 23/74, F24S 25/13, F24S 30/425

(54) **PARABOLRINNENKOLLEKTORMODUL, PARABOLRINNENKOLLEKTORMODULEINHEIT SOWIE SOLARTHERMISCHES KRAFTWERTK**
PARABOLIC TROUGH COLLECTOR MODULE, PARABOLIC TROUGH COLLECTOR MODULE UNIT, AND SOLAR THERMAL POWER PLANT
MODULE RÉFLECTEUR CYLINDRO-PARABOLIQUE , UNITÉ DE MODULE RÉFLECTEUR CYLINDRO-PARABOLIQUE ET CENTRALE HÉLIOTHERMIQUE

(30) Priorität: 13.08.2019 DE 202019104454 U
(43) Veröffentlichungstag der Anmeldung: 22.06.2022
(73) Patentinhaber: Deutsches Zentrum für Luft- und Raumfahrt e.V., 51147 Köln (DE)
(72) Erfinder: EICKHOFF, Martin, 04560 Gador (Almeria) (ES)
(74) Vertreter: dompatent von Kreisler Selting Werner - Partnerschaft von Patent- und Rechtsanwälten mbB
(86) Internationale Anmeldenummer: PCT/EP2020/071819
(87) Internationale Veröffentlichungsnummer: WO 2021/028251

(56) Entgegenhaltungen:
- DE-U1- 202015 001 498
- US-A- 3 847 136
- US-A1- 2012 186 579
- US-A1- 2018 023 845

## Beschreibung

Die vorliegende Erfindung betrifft ein Parabolrinnenkollektormodul mit einem Absorberrohr, einem Solarstrahlung auf das Absorberrohr fokussierenden Parabolrinnenreflektor mit einer Reflektorfläche und mit mindestens einer Ständervorrichtung, an der der Parabolreflektor verschwenkbar gelagert ist. Die Erfindung betrifft ferner eine Parabolrinnenkollektormoduleinheit mit mehreren Parabolrinnenkollektormodulen sowie ein Solarkraftwerk mit mehreren Parabolrinnenkollektormoduleinheiten.

Solarthermische Kraftwerke nutzen die Energie des Sonnenlichts zur Erwärmung eines Wärmeträgermediums, wobei die Wärme häufig zur Stromerzeugung genutzt wird. Die Solarstrahlung wird mittels optischer Konzentratoren auf einen Absorber fokussiert, in welchem das Wärmeträgermedium zirkuliert. Die optischen Konzentratoren stellen den größten Investitionsposten von solarthermischen Kraftwerken dar und beeinflussen deren Wirkungsgrad maßgeblich.

Bekannte solarthermische Kraftwerke weisen Parabolrinnenkollektoren auf. Ein Parabolrinnenkollektor enthält eine langgestreckte Kollektorstruktur mit parabelförmigem Querschnitt. Typische Aperturöffnungen betragen 5-7 m. Einzelne Parabolrinnenkollektormodule, die auch "Solarkollektorelements" (SCE) genannt werden, haben eine Länge von ca. 12 m. Mehrere derartige Module werden zu Parabolrinnenkollektoreinheiten zusammengesetzt, die im Allgemeinen in Nord-Süd-Richtung ausgerichtet sind. Die Module einer Einheit werden üblicherweise gemeinsam verschwenkt, um die Parabolreflektoren dem Sonnenstand nachzuführen. Die Schwerpunktachse bekannter Module und somit die Drehachse der Module befindet sich in der Nähe des Scheitels der Parabel und somit entfernt von dem Absorberrohr. Daher wird das Absorberrohr üblicherweise beim Verschwenken mitgeführt. Um dies zu ermöglichen, werden die Absorberrohre über spezielle Absorberrohrhalter direkt mit dem Parabolreflektor bzw. der Tragstruktur des Parabolreflektors verbunden. Zwischen zwei unabhängig voneinander bewegbaren Parabolrinnenkollektoreinheiten sind daher flexible Absorberrohrverbindungen notwendig, die über sogenannte Ball Joint-Verbindungsleitungen oder Swivel Joint-Verbindungsleitungen geschaffen werden. Derartige Verbindungsleitungen sind konstruktiv aufwändig und relativ kosten- und wartungsintensiv. Die flexiblen Absorberrohrverbindungen führen darüber hinaus zu einem Druckabfall und Wärmeverlusten. Ferner muss die Tragstruktur des Parabolreflektors tragfest und stabil ausgebildet sein, um die hohen Gewichtskräfte des Absorberrohres aufzunehmen. Da die Parabolreflektoren den größten Investitionsposten darstellen, erhöht die stabile Konstruktion dieser Parabolreflektoren die Investitionskosten erheblich.

Ferner dehnen sich die Absorberrohre bei dem Erhitzen mittels der Solarstrahlung wärmebedingt aus. Die Absorberhalter müssen daher die axiale Längung der Absorberrohre kompensieren. Daher ist vorgesehen, dass die Absorberrohrhalter üblicherweise über ein Scharnier oder ein Federblech kippbar mit dem Parabolreflektor verbunden sind. Durch das Kippen des Absorberrohrhalters verändert sich der Abstand zwischen dem Parabolreflektor und dem Absorberrohr, so dass das Absorberrohr bei einer starken Kippung der Absorberhalterungen außerhalb des Fokus des Parabolreflektors rücken kann. Dadurch ist die maximale Länge von Parabolrinnenkollektoreinheiten begrenzt. Zusätzlich müssen an jedem Ende einer Kollektoreinheit zur Kompensation der axialen Längung und der Drehung des Absorberrohres rotative Längenkompensationsvorrichtungen vorgesehen werden. Diese führen zu erhöhten Investitions- und Wartungskosten und darüber hinaus führen diese zu Druckverlusten und Wärmeverlusten während des Betriebs.

Ferner sind sogenannte Fix-Fokuskollektoren bekannt, bei denen der Parabolreflektor um das Absorberrohr verschwenkt wird. Bei derartigen Kollektoren wird das Absorberrohr nicht mit verschwenkt, so dass auf die kostenintensiven Absorberrohrverbindungen zwischen zwei Parabolrinnenkollektoreinheiten verzichtet werden kann. Die Absorberrohre werden jedoch weiterhin direkt mit dem Parabolreflektor bzw. der Parabolreflektortragstruktur über Absorberrohrhalter verbunden, wobei weiterhin jedoch die Probleme der Absorberrohrhalterung bestehen. US 2012/186579 A1 offenbart ein Parabolrinnenkollektormodul nach dem Stand der Technik. Ein Parabolrinnenkollektormodul mit den Merkmalen des Oberbegriffs von Anspruch 1 ist aus US 3 847 136 A bekannt.

Aus DE 20 2015 000 425 U1 und DE 20 2015 001 498 U1 der Anmelderin sind Fix-Fokuskollektoren bekannt, wobei das Absorberrohr über eine Linearführung an einer Ständervorrichtung gelagert ist. DE 20 2015 000 425 U1 sieht hierfür eine Gleitschiene vor, die über Zugmittel an der Ständervorrichtung abgespannt ist. Es hat sich jedoch herausgestellt, dass eine Abspannung der Gleitschiene sehr aufwendig ist und Stabilitätsprobleme auftreten können.

Es ist daher die Aufgabe der vorliegenden Erfindung einen Parabolrinnenkollektormodul der eingangsgenannten Art zu schaffen, bei dem das Absoberrohr auf konstruktiv einfache Art und Weise gelagert ist. Es ist ferner die Aufgabe der vorliegenden Erfindung eine Parabolrinnenkollektoreinheit mit einem derartigen Modul sowie ein solarthermisches Kraftwerk mit einer derartigen Parabolrinnenkollektoreinheit zu schaffen.

Das erfindungsgemäße Parabolrinnenkollektormodul ist definiert durch die Merkmale des Anspruchs 1.

Die erfindungsgemäße Parabolrinnenkollektoreinheit ist definiert durch die Merkmale des Anspruchs 10.

Das erfindungsgemäße solarthermische Kraftwerk ist definiert durch die Merkmale des Anspruchs 12.

Das erfindungsgemäße Parabolrinnenkollektormodul weist ein Absorberrohr mit einer Mittelachse, einem Solarstrahlung auf das Absorberrohr fokussierenden Parabolreflektor mit einer Reflektorfläche und eine Ständervorrichtung auf. An der Ständervorrichtung ist der Parabolreflektor verschwenkbar gelagert. Die Ständervorrichtung weist mindestens einen Ständer auf, wobei das Absorberrohr an dem Ständer gelagert ist. Der Parabolreflektor weist in der Reflektorfläche eine sich quer zu der Längsrichtung erstreckende Aussparung auf, wobei eine Stützvorrichtung sich durch die Aussparung erstreckt. Die Erfindung ist dadurch gekennzeichnet, dass die Stützvorrichtung eine eine Linearführung bildende Absorberrohrhalterung aufweist, an der das Absorberrohr in eine Längsrichtung verschiebbar gelagert ist.

Bei dem erfindungsgemäßen Parabolrinnenkollektormodul kann somit das Absorberrohr in vorteilhafter Weise mittels der Stützvorrichtung abgestützt werden, wobei durch die Linearführung das Absorberrohr sich bei Erwärmung ungehindert ausdehnen kann. Durch die Linearführung kann sich das Absorberrohr entsprechend der Längendehnung gegenüber der Stützvorrichtung verschieben. Ferner kann durch die Stützvorrichtung ein Teil des Gewichts des Absorberrohres aufgenommen werden, so dass auf aufwendige Konstruktionen im Bereich der Ständervorrichtung zur Aufnahme des Gewichts des Absorberrohres verzichtet werden kann.

Die Stützvorrichtung kann insbesondere das Absorberrohr am Boden abstützen.

Dadurch, dass sich die Stützvorrichtung durch die Aussparung in dem Parabolreflektor hindurch erstreckt, kann die Abstützung des Absorberrohrs unabhängig von dem Parabolreflektor und der Ständervorrichtung erfolgen. Unter Längsrichtung des Absorberrohrs wird im Rahmen der Erfindung die Richtung der Mittelachse A des Absorberrohrs verstanden.

Insbesondere kann vorgesehen sein, dass der Parabolreflektor an der Ständervorrichtung um eine Drehachse verschwenkbar gelagert ist, wobei die Drehachse D der Mittelachse A des Absorberrohrs entspricht.

Vorzugsweise ist vorgesehen, dass an dem mindestens einen Ständer eine eine Linearführung bildende Linearlagerung angeordnet ist, über die das Absorberrohr in eine Längsrichtung verschiebbar gelagert ist. Das Absorberrohr ist daher neben der Lagerung an der Absorberrohrhalterung der Stützvorrichtung auch über eine Linearlagerung an dem Ständer gelagert. Dadurch wird die zu tragende Gewichtskraft des Absorberrohres auf die Stützvorrichtung und den mindestens einen Ständer verteilt.

Der Parabolreflektor kann insbesondere über eine Radiallagerung an der verschwenkbaren Ständervorrichtung gelagert sein, wobei die Radiallagerung um das Absorberrohr oder um das Absorberrohr und die Linearlagerung angeordnet ist. Mittels einer derartigen Radiallagerung lässt sich auf konstruktiv einfache Art und Weise eine Lagerung für den Parabolreflektor schaffen, bei dem die Drehachse auf der Mittelachse des Absorberrohrs verläuft, so dass der Parabolreflektor um das Absorberrohr verschwenkt wird. Das Absorberrohr bzw. das Absorberrohr und das Linearlager werden dabei in vorteilhafter Weise durch die Radiallagerung hindurchgeführt.

Bei dem erfindungsgemäßen Parabolrinnenkollektormodul kann eine Tragstruktur mit zwei Tragstreben vorgesehen sein, die quer zu der Mittelachse des Absorberrohrs angeordnet sind und über die der Parabolreflektor an der Ständervorrichtung gelagert ist. Eine derartige Konstruktion hat sich als besonders vorteilhaft herausgestellt und bietet eine konstruktive einfache Halterung des Parabolreflektors an der Ständervorrichtung. Dabei ist vorzugsweise vorgesehen, dass die Tragstreben jeweils an einer Stirnseite des Parabolreflektors angeordnet sind.

Vorzugsweise ist vorgesehen, dass die Tragstruktur zwei sich parallel zu Längsseiten des Parabolreflektors erstreckende torisionssteife Trägerelemente aufweisen. Über die Trägerelemente lässt sich die Stabilität des Parabolreflektors in vorteilhafter Weise derart ausgestalten, dass es nur zu einer geringen Verwindung des Parabolreflektors kommen kann. Vorzugsweise ist vorgesehen, dass jeweils ein Trägerelement an einer der sich entlang der Längsseiten des Parabolreflektors erstreckenden Längsränder angeordnet ist. Zusammen mit den Tragstreben können die torsionssteifen Trägerelemente somit einen Rahmen für den Parabolreflektor schaffen, so dass eine sehr stabile Konstruktion verwirklichbar ist. Hierzu können die Trägerelemente mit den Tragstreben verbunden sein.

Die Anordnung der Trägerelemente an den Seitenrändern bietet ferner ausreichend Platz für die sich quer zu der Längsrichtung erstreckenden Aussparung, so dass verhindert wird, dass bei der Verschwenkbewegung des Parabolreflektors die Stützvorrichtung mit den Trägerelementen kollidiert.

Die Tragstreben und/oder die torsionssteifen Trägerelemente können zumindest teilweise oberhalb einer durch die Mittelachse des Absorberrohrs verlaufende Horizontalebene angeordnet sein. Dadurch kann ein "Gegengewicht" zu den sich unterhalb dieser Horiontalebene befindlichen Abschnitte des Parabolreflektors geschaffen werden. Insbesondere kann vorgesehen sein, dass die Schwerpunktachse des Parabolreflektors der Drehachse D des Parabolreflektors entspricht. Dadurch ist der Parabolreflektor in besonders vorteilhafter Weise verschwenkbar, wobei das Gewicht des gesamten Parabolrinnenkollektormoduls ausbalanciert werden kann und keine Torsionsbelastung durch Unwucht entsteht.

Der Parabolreflektor kann über eine Radiallagerung an dem mindestens einen Ständer gelagert sein, wobei die Radiallagerung ein Radiallager aufweist und wobei die Tragstreben oberhalb des Radiallagers verlaufen und mit dem Radiallager verbunden sind. Eine derartige Konstruktion hat sich als besonders vorteilhaft insbesondere auch in Bezug auf die Anordnung der Schwerpunktachse herausgestellt.

In einer bevorzugten Ausführungsform der Erfindung ist vorgesehen, dass die Absorberrohrhalterung eine sich in axialer Richtung des Absorberrohrs erstreckende Linearlagerschiene aufweist. Eine derartige Linearlagerschiene bietet in vorteilhafter Weise eine Linearlagerung für das Absorberrohr. Dabei kann vorgesehen sein, dass ein mit dem Absorberrohr verbundenes Laufwerk auf der Linearlagerschiene geführt ist.

Vorzugsweise ist vorgesehen, dass die Linearlagerschiene an der Oberseite des Absorberrohrs angeordnet ist. Mit anderen Worten: In einer Grundstellung des Parabolreflektors, in der die Seitenränder des Parabolreflektors sich in einer horizontalen Ebene befinden, ist die Linearlagerschiene auf der von dem Parabolreflektor abgewandten Seite des Absorberrohres angeordnet. Diese Seite ist die Seite des Absorberrohrs, die nicht von der Reflektorfläche reflektierte Strahlung bestrahlt wird. Somit wird verhindert, dass die Linearlagerschiene einerseits das Absorberrohr in Hinblick auf konzentrierte Solarstrahlung verschattet und andererseits wird ein zu hoher Wärmeeintrag in die Linearlagerschiene verhindert. Die Stützvorrichtung kann beispielsweise eine Durchführaussparung aufweisen, durch die sich das Absorberrohr erstreckt. Somit wird in vorteilhafter Weise erreicht, dass die Stützvorrichtung die an der Oberseite des Absorberrohrs angeordnete Linearlagerschiene haltern kann. Selbstverständlich besteht auch die Möglichkeit, dass die Stützvorrichtung einseitig an dem Absorberrohr vorbeigeführt ist um die Linearlagerschiene zu haltern.

Bei dem erfindungsgemäßen Parabolrinnenkollektormodul kann vorgesehen sein, dass die Aussparung für die Stützvorrichtung in den Parabolreflektor eingebracht ist, indem beispielsweise die Aussparung in der Reflektorfläche angeordnet ist. Grundsätzlich besteht auch die Möglichkeit, dass die Aussparung dadurch gebildet ist, dass die Reflektorfläche zweigeteilt ist, wobei sich die Aussparung zwischen den beiden Teilen befindet. Die Reflektorflächen werden auf der Tragstruktur angeordnet, wobei sich die Tragstruktur in Längsrichtung des Parabolrinnenkollektormoduls durchgängig erstreckt.

Die Erfindung betrifft ferner eine Parabolrinnenkollektoreinheit mit mehreren erfindungsgemäßen, in einer Reihe angeordneten Parabolrinnenkollektormodulen, wobei die Parabolrinnenkollektormodule ein gemeinsames durchgehendes Absorberrohr aufweisen.

Dabei kann vorgesehen sein, dass die Tragstrukturen zweier benachbarter Parabolrinnenkollektormodule miteinander verbunden sind. Dadurch kann erreicht werden, dass ein beispielsweise durch einen Antrieb auf ein Parabolrinnenkollektormodul ausgeübtes Drehmoment auch auf das benachbarte Parabolrinnenkollektormodul übertragen wird, so dass beide Parabolrinnenkollektormodule gemeinsam miteinander verschwenkt werden. Die Verbindung der Tragstrukturen kann beispielsweise über die Tragstreben erfolgen. Selbstverständlich ist auch möglich, dass die Tragstrukturen über die Trägerelemente miteinander verbunden sind.

Es kann vorgesehen sein, dass zwei benachbarte Parabolrinnenkollektormodule jeweils einen gemeinsamen Ständer aufweisen. Dadurch kann ermöglicht werden, dass die beiden benachbarten Parabolrinnenkollektormodule auf einer gemeinsamen Radiallagerung gelagert werden. Hierzu können beispielsweise die einander zugewandten Tragstreben der benachbarten Parabolrinnenkollektormodule miteinander und mit der Radiallagerung verbunden sein. Dadurch wird der konstruktive Aufwand der Ständervorrichtung geringgehalten.

Die Erfindung betrifft ferner ein solarthermisches Kraftwerk mit mehreren erfindungsgemäßen in einer Reihe angeordneten Parabolrinnenkollektoreinheiten, wobei mindestens zwei benachbarte Parabolrinnenkollektoreinheiten einen gemeinsamen durchlaufenden Absorberrohrstrang aufweisen.

Die erfindungsgemäße Konstruktion der Parabolrinnenkollektormodule ermöglicht somit, dass eine Vielzahl von Parabolrinnenkollektormodulen ein gemeinsames durchgehendes Absorberrohr aufweisen, so dass Wärme- und Druckverluste aufgrund von im Stand der Technik notwendigen Absorberrohrverbindungen vermieden werden. Ferner ist eine derartige Konstruktion kostengünstig realisierbar.

Im Folgenden wird unter Bezugnahme auf die nachfolgenden Figuren die Erfindung näher erläutert.

Es zeigen:
- Figur 1: eine schematische perspektivische Darstellung einer Reihe von erfindungsgemäßen Parabolrinnenkollektormodulen,
- Figur 2: eine schematische Seitenansicht der Stirnseite eines erfindungsgemäßen Parabolrinnenkollektormoduls und
- Figur 3a: eine Detaildarstellung der Linearlagerung des Absorberrohrs und der Radiallagerung der Parabolreflektoren aus Fig. 1,
- Figur 3b: eine Detaildarstellung der Absorberrohrhalterung des erfindungsgemäßen Parabolrinnenkollektormoduls der Fig. 1,

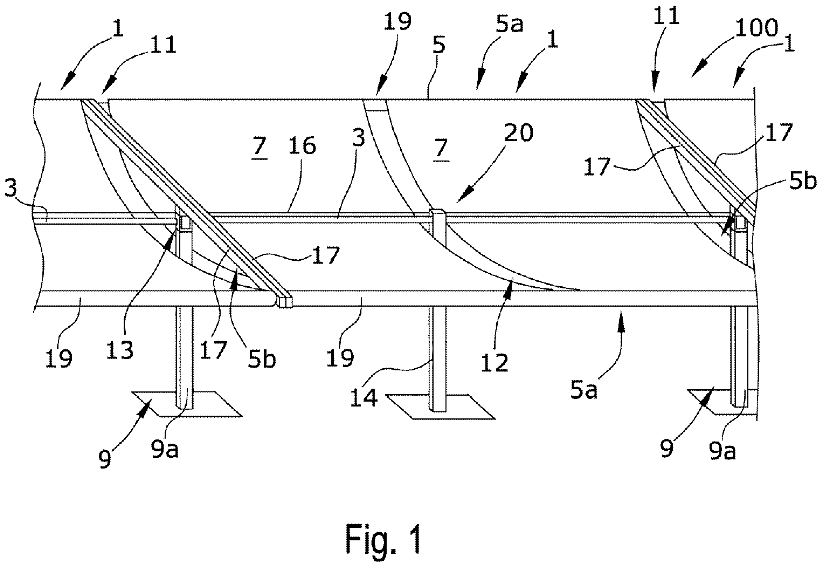

In Fig. 1 ist ein erfindungsgemäßes Parabolrinnenkollektormodul 1 schematisch in einer perspektivischen Darstellung gezeigt. Mehrere der erfindungsgemäßen Parabolrinnenkollektormodule 1 können, wie in Fig. 1 angedeutet ist, in einer Reihe angeordnet werden. Mehrere der Parabolrinnenkollektormodule 1, beispielsweise vierzehn, bilden eine Parabolrinnenkollektoreinheit 100. Mehrere Parabolrinnenkollektoreinheiten 100 aus erfindungsgemäßen Parabolrinnenkollektormodulen 1 können in einer Reihe angeordnet werden. Beispielsweise sechs in einer Reihe angeordnete erfindungsgemäße Parabolrinnenkollektoreinheiten 100 bilden einen sogenannten Parabolrinnenkollektor eines erfindungsgemäßen solarthermischen Kraftwerks. Ein erfindungsgemäßes solarthermisches Kraftwerk kann aus mehreren derartig zusammengesetzten Parabolrinnenkollektoren bestehen.

Die Parabolrinnenkollektoren sind üblicherweise in Nord-Süd-Richtung ausgerichtet.

Jedes erfindungsgemäße Parabolrinnenkollektormodul 1 weist ein Absorberrohr 3 auf. Mittels eines Parabolreflektors 5, der eine Reflektorfläche 7 aufweist, kann solare Strahlung auf das Absorberrohr 3 reflektiert werden. Das Parabolrinnenkollektormodul 1 weist eine Ständervorrichtungen 9 mit Ständern 9a auf, an denen der Parabolreflektor 5 verschwenkbar gelagert ist. Zwei benachbarte Parabolrinnenkollektormodule 1 teilen sich jeweils einen Ständer 9a.

Das Absorberrohr 3 erstreckt sich durchgängig über mehrere Parabolrinnenkollektormodule 1.

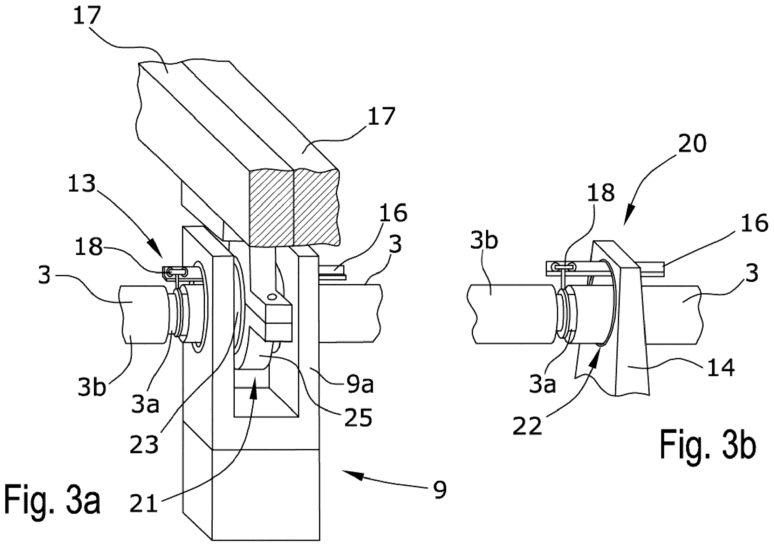

Das Absorberrohr 3 ist an der Ständervorrichtung 9 über eine eine Linearführung bildende Linearlagerung 13 gehaltert. Die Linearlagerung 13 ist im Detail in Fig. 3a dargestellt.

Der Parabolreflektor 5 weist in der Reflektorfläche 7 ein sich quer zu der Längsrichtung erstreckende Aussparung 12 auf. Durch die Aussparung 12 erstreckt sich eine Stützvorrichtung 14, die sich ähnlich wie die Ständer 9a auf dem Boden abstützt. An ihrem oberen Ende weist die Stützvorrichtung 14 eine Absorberrohrhalterung 20 auf. Die Absorberrohrhalterung bildet eine Linearführung für das Absorberrohr 3, so dass dieses in Längsrichtung verschiebbar gelagert ist. Zur Bildung der Linearführung an der Absorberrohrhalterung 20 und der Linearlagerung 13 an den Ständern 9a erstreckt sich oberhalb des Absorberrohrs 3 eine Gleitschiene 16, an der das Absorberrohr 3 geführt ist, wie am besten aus den Figuren 3a und 3b hervorgeht.

Die Stützvorrichtung 14 stützt zumindest einen Teil des Gewichts des Absorberrohrs 3 auf dem Boden ab und somit wird eine vorteilhafte Halterung des Absorberrohrs 3 geschaffen. Durch die Abstützung des Absorberrohrs mittels der Stützvorrichtung 14 wird sichergestellt, dass das Absorberrohr 3 weitestgehend in der Fokuslinie des Parabolreflektors 5 angeordnet ist und Abweichungen aufgrund von beispielsweise einer Durchbiegung des Absorberrohrs 3 werden vermieden.

Durch das Vorsehen der Aussparung 12 wird sichergestellt, dass ein Verschwenken des Parabolreflektors 5 auch ungeachtet der Stützvorrichtung 14 weiterhin möglich ist. Grundsätzlich kann vorgesehen sein, dass die Aussparung 12 als eine Art Langloch in der Reflektorfläche 7 gebildet ist. In dem in Fig. 1 dargestellten Ausführungsbeispiel ist die Reflektorfläche 7 komplett unterbrochen, so dass zwei Reflektorteilflächen gebildet sind.

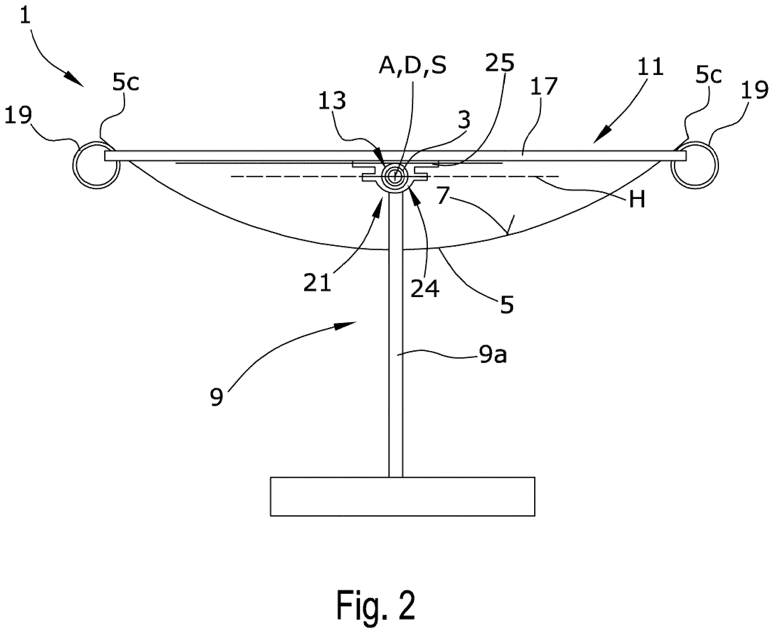

Der Parabolreflektor 5 weist eine Tragstruktur 11 auf, mittels der der Parabolreflektor 5 an der Ständervorrichtung 9 verschwenkbar gelagert ist. Wie am besten aus Fig. 2 hervorgeht, in der eine der in Fig. 1 dargestellten Parabolrinnenkollektormodule 1 schematisch in einer Sicht auf die Stirnseite 5b dargestellt ist, ist der Parabolreflektor 5 über die Tragstruktur 11 mittels einer Radiallagerung 21 an der Ständervorrichtung 9 gelagert. Die Radiallagerung 21 weist dabei an jedem Ständer 9a ein Radiallager 24 auf. Das Absorberrohr 3 erstreckt sich dabei durch das Radiallager 24 . Dadurch kann sich das Absorberrohr 3 über benachbarte Parabolrinnenkollektormodulen 1 erstrecken.

Die Tragstruktur 11 eines Parabolrinnenkollektormoduls 1 besteht aus zwei Tragstreben 17 , die jeweils an einer der Stirnseiten 5b angeordnet sind. Die Tragstruktur 11 weist ferner zwei torsionssteife Trägerelemente 19 auf, die parallel zu den Längsseiten 5a angeordnet sind. Bei dem in den Figuren dargestellten Ausführungsbeispiel sind die torsionssteifen Trägerelemente 19 an den Längsrändern 5c des Parabolreflektors 5 angeordnet.

Die Tragstreben 17 sind mit den torsionssteifen Trägerelementen 19 verbunden. Somit wird ein Rahmen gebildet, in den der Parabolreflektor 5 eingesetzt ist. Die Tragstrebe 17 verläuft in etwa entlang einer Sehne zu der Parabelform des Parabolreflektors 5.

Die Tragstrebe 17 ist mit einem Lagergehäuse 25 des Radiallagers 24 verbunden, wodurch die Lagerung der Tragstruktur 11 an der Ständern 9a erfolgt.

Die Radiallagerung 21 ist derart angeordnet, dass die Drehachse D des Parabolreflektors 5 der Mittelachse A des Absorberrohres 3 entspricht. Dadurch wird gewährleistet, dass der Parabolreflektor um das statisch verbleibende Absorberrohr verschwenkt werden kann.

Die Tragstrebe 17 verläuft oberhalb der Radiallagerung 21. Somit befinden sich die Tragstrebe 17 sowie Teile der Trägerelemente 19 oberhalb der durch die Mittelachse des Absorberrohres verlaufenden Horizontalebene H, in der auch die Drehachse D liegt. Durch eine entsprechende Materialwahl der Tragstruktur 11 kann somit ein "Gegengewicht" zu dem unterhalb der Horizontalebene H angeordneten Teil des Reflektors 5 geschaffen werden, so dass die Schwerpunktachse S des Parabolreflektor 5 und Tragstruktur 11 auf die Drehachse D gelegt werden kann. Dadurch wird vermieden, dass es bei einem Verschwenken des Parabolreflektors 5 im Betrieb zu einem Ungleichgewicht kommen kann, was zu einem Überkippen des Parabolreflektors 5 führen würde.

Die torsionssteifen Trägerelemente 19 können beispielsweise als sogenannte Torsionsrohre ausgebildet sein. Beispielsweise können sie als torsions- und biegesteife Sandwichrohre aus einer Stahlrohr-GFK-Stahlrohr-Verbindung ausgebildet sein.

Durch die Trägerelemente 19 wird erreicht, das auch bei durch die Aussparung 12 vollständig unterbrochener Reflektorfläche 7 eine stabile Struktur des Parabolreflektors 5 vorhanden ist und Drehmomente übertragen werden können.

Wie aus Fign. 3a und 3b hervorgeht, besteht die Linearlagerung 13 aus einer Linearlagerschiene 16, die oberhalb des Absorberrohrs 3 und parallel zu dem Absorberrohr 3 angeordnet ist. Auf der Linearlagerschiene 16 ist ein Laufwerk 18 geführt, das auf der Linearlagerschiene 16 mittels Rollen abrollt. Das Absorberrohr 3 ist mit dem Laufwerk 18 verbunden und wird mittels des Laufwerks 18 in die Linearlagerschiene 16 eingehängt, so dass das Absorberrohr 3 unterhalb der Linearlagerschiene 16 hängt.

Die Radiallagerung 21 ist auf einem Durchgangsrohr 23, das an dem Ständer 9a befestigt ist, gelagert. Das Durchgangsrohr 23 verläuft in axialer Richtung des Absorberrohrs 3. Durch das Durchgangsrohr 23 ist das Absorberrohr 3 geführt. In dem Durchgangsrohr 23 ist ferner die Linearlagerschiene 16 der Linearlagerung 13 befestigt. Mittels einer derartigen Konstruktion wird auf einfache Art und Weise eine Befestigung der Linearlagerung 13 an dem Ständer 9a bereitgestellt, wobei gleichzeitig eine verschwenkbare Lagerung des Parabolreflektors 5 um eine Drehachse geschaffen werden kann, die mit der Mittelachse des Absorberrohrs 3 zusammenfällt.

Die Absorberrohrhalterung 20 ist in Fig. 3b im Detail dargestellt. Die Absorberrohrhalterung 20 ist am oberen Ende der Stützvorrichtung 14 gebildet und trägt die sich in axialer Richtung des Absorberrohrs 3 erstreckende Linearlagerschiene 16. Mittels der Linearlagerschiene 16 ist ein Laufwerk 18 linear geführt, das mit dem Absorberrohr 3 verbunden ist. Die Führung des Laufwerks 18 an der Linearlagerschiene 16 erfolgt in gleicher Weise wie bei der Linearlagerung 13.

Über die Absorberrohrhalterung 20 kann eine von dem Parabolreflektor 5 unabhängige Lagerung des Absorberrohrs 3 erfolgen.

Die Absorberrohre 3 bestehen aus einem Innenrohr 3a und einem Hüllrohr 3b, das transparent für solare Strahlung ist. Durch das Innenrohr 3a wird im Betrieb ein Wärmeträgermedium geleitet.

Die Laufwerke 18 sind mit dem Innenrohr 3a verbunden. Das Hüllrohr 3b ist dabei an dieser Stelle unterbrochen. Um den zwischen Hüllrohr 3b und dem Innenrohr 3a gebildeten Spaltraum evakuieren zu können, sind die Teile des Hüllrohrs 3b an der Unterbrechungsstelle abgedichtet.

Die Linearlagerung 13 und die Absorberrohrhalterung 20 ermöglichen eine lineare Bewegung des Absorberrohrs 3 in axiale Richtung. Dadurch können Wärmedehnungen des Absorberrohrs 3 erfolgen, ohne dass es zu Verspannungen oder Ausbiegungen des Absorberrohrs 3 kommen kann.

Die Stützvorrichtung 14 weist eine Durchführaussparung 22 auf, durch die sich das Absorberrohr 3 erstreckt. Die Linearlagerschiene 16 ist an der Oberseite des Absorberrohrs 3 angeordnet und somit an der Seite, an der keine oder nur ein geringer Anteil von Solarstrahlung, die von dem Parabolreflektor 5 reflektiert ist, hingelangt. Durch das Vorsehen der Durchführaussparung 22 wird erreicht, dass die Stützvorrichtung 14 die Linearlagerschiene 16 in vorteilhafter Weise haltern kann.

Vorzugsweise ist die Durchführaussparung 22 im Bereich der Absorberrohrhalterung 20 der Stützvorrichtung 14 gebildet.

Die erfindungsgemäße Ausgestaltung der Parabolrinnenkollektormodule 1 ermöglicht in vorteilhafter Weise eine Fix-Fokus-Konstruktion. Dadurch können in vorteilhafter Weise Parabolrinnenkollektoreinheiten aus mehreren Parabolrinnenkollektormodulen geschaffen werden, die einen gemeinsamen und durchgehenden Absorberstrang aus Absorberrohren 3 aufweisen. Es kann somit ein solarthermisches Kraftwerk geschaffen werden, das mit geringen Investitionskosten bereitstellbar ist, wobei gleichzeitig aufgrund verringerter Druck- und Wärmeverluste im Absorberrohrbereich ein höherer Wirkungsgrad verwirklicht werden kann.

## Patentansprüche

1. Parabolrinnenkollektormodul (1) mit einem Absorberrohr (3) mit einer Mittelachse (A), einem Solarstrahlung auf das Absorberrohr (3) fokussierenden Parabolreflektor (5) mit einer Reflektorfläche (7) und mit einer Ständervorrichtung (9), an dem der Parabolreflektor (5) verschwenkbar gelagert ist, wobei die Ständervorrichtung (9) mindestens einen Ständer (9a) aufweist, wobei das Absorberrohr (3) an dem Ständer (9a) gelagert ist, wobei der Parabolreflektor (5) in der Reflektorfläche (7) eine sich quer zu der Längsrichtung erstreckende Aussparung (12) aufweist, wobei eine Stützvorrichtung (14) sich durch die Aussparung (12) erstreckt,
**dadurch gekennzeichnet,**
**dass** die Stützvorrichtung (14) eine eine Linearführung bildende Absorberrohrhalterung (20) aufweist, an der das Absorberrohr (3) in eine Längsrichtung verschiebbar gelagert ist.

2. Parabolrinnenkollektormodul nach Anspruch 1, **dadurch gekennzeichnet, dass** an dem mindestens einen Ständer (9a) eine eine Linearführung bildende Linearlagerung (13) angeordnet ist, über die das Absorberrohr (3) in eine Längsrichtung verschiebbar gelagert ist.

3. Parabolrinnenkollektormodul nach Anspruch 1 oder 2, **gekennzeichnet durch** eine Tragstruktur (11) mit zwei Tragstreben (17), die quer zu Mittelachse (A) des Absorberrohres (3) angeordnet sind und über die der Parabolreflektor (5) an der Ständervorrichtung gehaltert ist.

4. Parabolrinnenkollektormodul nach Anspruch 3, **dadurch gekennzeichnet, dass** die Tragstreben (17) jeweils an einer Stirnseite des Parabolreflektor (5) angeordnet sind.

5. Parabolrinnenkollektormodul nach Anspruch 3 oder 4, **dadurch gekennzeichnet, dass** die Tragstruktur (11) zwei sich parallel zu Längsseiten (5b) des Parabolreflektor (5) ersteckende torsionssteife Trägerelemente (19) aufweist.

6. Parabolrinnenkollektormodul nach Anspruch 5, **dadurch gekennzeichnet, dass** die Trägerelemente (19) mit den Tragstreben (17) verbunden sind.

7. Parabolrinnenkollektormodul nach einem der Ansprüche 1 bis 6, **dadurch gekennzeichnet, dass** die Absorberrohrhalterung (20) eine sich in axialer Richtung des Absorberrohr erstreckende Linearlagerschiene (16) aufweist.

8. Parabolrinnenkollektormodul nach Anspruch 7, **dadurch gekennzeichnet, dass** die Linearlagerschiene (16) an der Oberseite des Absorberrohres (3) angeordnet ist.

9. Parabolrinnenkollektormodul nach Anspruch 8, **dadurch gekennzeichnet, dass** die Stützvorrichtung (14) eine Durchführaussparung (22) aufweist, durch die sich das Absorberrohr (3) erstreckt.

10. Parbolrinnenkollektoreinheit (100) mit mehreren, in einer Reihe angeordneten Parabolrinnenkollektormodulen (1) nach einem der Ansprüche 1 bis 9, wobei die Parabolrinnenkollektormodule (1) ein gemeinsames, durchgehendes Absorberrohr (3) aufweisen.

11. Parbolrinnenkollektoreinheit nach Anspruch 10, **dadurch gekennzeichnet, dass** zwischen zwei benachbarten Parabolrinnenkollektormodulen (1) jeweils eine gemeinsame Ständervorrichtung (9) angeordnet ist.

12. Solarthermisches Kraftwerk mit mehreren, in einer Reihe angeordneten Parbolrinnenkollektoreinheiten (100) nach Anspruch 10 oder 11, wobei mindestens zwei benachbarte Parbolrinnenkollektoreinheiten (100) einen gemeinsamen, durchgehenden Absorberrohrstrang aufweisen.

## Claims

1. Parabolic trough collector module (1) comprising an absorber tube (3) having a central axis (A), a parabolic reflector (5) which focuses solar radiation onto the absorber tube (3) and which comprises a reflector surface (7), and a stand device (9), on which the parabolic reflector (5) is pivotally mounted, the stand device (9) having at least one stand post (9a) and the absorber tube (3) being mounted on the stand post (9a), wherein the parabolic reflector (5) has a recess (12) in the reflector surface (7), which recess runs transversely to the longitudinal direction, a support device (14) extending through the recess (12),
**characterized in that**
the support device (14) has an absorber tube mount (20) that forms a linear guide, on which mount the absorber tube (3) is mounted for displacement in a longitudinal direction.

2. Parabolic trough collector module according to claim 1, **characterized in that** a linear bearing (13) forming a linear guide is arranged on the at least one stand post (9a), via which bearing the absorber tube (3) is mounted for displacement in a longitudinal direction.

3. Parabolic trough collector module according to claim 1 or 2, **characterized by** a support structure (11) comprising two supporting struts (17) arranged transversely to the central axis (A) of the absorber tube (3) and via which the parabolic reflector (5) is mounted on the stand device.

4. Parabolic trough collector module according to claim 3, **characterized in that** the supporting struts (17) are respectively arranged on an end face of the parabolic reflector (5).

5. Parabolic trough collector module according to claim 3 or 4, **characterized in that** the support structure (11) comprises two torsion-resistant support elements (19) extending parallel to longitudinal sides (56) of the parabolic reflector (5).

6. Parabolic trough collector module according to claim 5, **characterized in that** the support elements (19) are connected with the supporting struts (17).

7. Parabolic trough collector module according to one of claims 1 to 6, **characterized in that** the absorber tube mount (20) comprises a linear bearing rail (16) extending in the axial direction of the absorber tube.

8. Parabolic trough collector module according to claim 7, **characterized in that** the linear bearing rail (16) is arranged on the upper side of the absorber tube (3).

9. Parabolic trough collector module according to claim 8, **characterized in that** the support device (14) comprises a feed-through recess (22) through which the absorber tube (3) extends.

10. Parabolic trough collector unit (100) comprising a plurality of parabolic trough collector modules (1) according to one of claims 1 to 9, which are arranged in a row, wherein the parabolic trough collector modules (1) comprise a common continuous absorber tube (3).

11. Parabolic trough collector unit according to claim 10, **characterized in that** a common stand device (9) is arranged respectively between two adjacent parabolic trough collector modules (1).

12. Solar thermal power plant comprising a plurality of parabolic trough collector units (100) according to claim 10 or 11, which are arranged in a row, wherein at least two adjacent parabolic trough collector units (100) comprise a common continuous absorber tube string.

## Revendications

1. Module collecteur de parabole linéaire (1) doté d'un tube d'absorption (3) possédant un axe médian (A), un réflecteur parabolique (5) concentrant le rayonnement solaire sur le tube d'absorption (3) et doté d'une surface réfléchissante (7) et d'un dispositif de support (9) sur lequel le réflecteur parabolique (5) est disposé de manière pivotante, dans lequel le dispositif de support (9) comporte au moins un support (9a), dans lequel le tube d'absorption (3) est disposé sur le support (9a), dans lequel le réflecteur parabolique (5) comporte dans la surface réfléchissante (7) un évidement (12) transversal par rapport à la direction longitudinale, dans lequel un dispositif de soutien (14) s'étend à travers l'évidement (12), **caractérisé en ce que** le dispositif de soutien (14) comporte une fixation de tube d'absorption (20) formant un guidage linéaire, sur laquelle le tube d'absorption (3) est disposé de manière à pouvoir coulisser dans une direction longitudinale.

2. Module collecteur de parabole linéaire selon la revendication 1, **caractérisé en ce que** sur l'au moins un support (9a) est disposé un palier linéaire (13) formant un guidage linéaire, par le biais duquel le tube d'absorption (3) est disposé de manière à pouvoir coulisser dans une direction longitudinale.

3. Module collecteur de parabole linéaire selon la revendication 1 ou 2, **caractérisé par** une structure porteuse (11) dotée de deux entretoises porteuses (17), lesquelles sont disposées transversalement par rapport à l'axe médian (A) du tube d'absorption (3) et par le biais desquelles le réflecteur parabolique (5) est maintenu sur le dispositif de support.

4. Module collecteur de parabole linéaire selon la revendication 3, **caractérisé en ce que** les entretoises porteuses (17) sont disposées respectivement sur une face frontale du réflecteur parabolique (5).

5. Module collecteur de parabole linéaire selon la revendication 3 ou 4, **caractérisé en ce que** la structure porteuse (11) comporte deux éléments porteurs (19) rigides en torsion et parallèles aux faces longitudinales (5b) du réflecteur parabolique (5).

6. Module collecteur de parabole linéaire selon la revendication 5, **caractérisé en ce que** les éléments porteurs (19) sont reliés aux entretoises porteuses (17).

7. Module collecteur de parabole linéaire selon l'une des revendications 1 à 6, **caractérisé en ce que** la fixation de tube d'absorption (20) comporte un rail de palier linéaire (16) s'étendant dans la direction axiale du tube d'absorption.

8. Module collecteur de parabole linéaire selon la revendication 7, **caractérisé en ce que** le rail de palier linéaire (16) est disposé sur la face supérieure du tube d'absorption (3).

9. Module collecteur de parabole linéaire selon la revendication 8, **caractérisé en ce que** le dispositif de soutien (14) comporte un évidement de passage (22) au travers duquel s'étend le tube d'absorption (3).

10. Unité collectrice de parabole linéaire (100) dotée de plusieurs modules collecteurs de parabole linéaire (1), disposés sur une rangée, selon l'une des revendications 1 à 9, dans laquelle les modules collecteurs de parabole linéaire (1) comportent un tube d'absorption (3) commun traversant.

11. Unité collectrice de parabole linéaire selon la revendication 10, **caractérisée en ce qu'**un dispositif de support (9) est respectivement disposé entre deux modules collecteurs (1) adjacents.

12. Centrale héliothermique dotée de plusieurs unités collectrices de parabole linéaire (100) disposées sur une rangée, selon l'une des revendications 10 ou 11, dans laquelle au moins deux unités collectrices (100) comportent une bande de tubes d'absorption commune qui les traverse.
